(19)

Europäisches
Patentamt
European
Patent Office
Office européen
des brevets

(11) **EP 1 837 626 A2**

(12) **EUROPEAN PATENT APPLICATION**

(43) Date of publication:
**26.09.2007 Bulletin 2007/39**

(51) Int Cl.:
***G01C 21/10*** *(2006.01)*

(21) Application number: **06127138.3**

(22) Date of filing: **22.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.12.2005 IT RM20050655**

(71) Applicants:
• **Universita'Degli Studi di Roma "La Sapienza" 00185 Roma (IT)**
• **Ospedale Pediatrico Bambino Gesù IRCCS 00165 Rome (IT)**

(72) Inventors:
• **Masia, Lorenzo**
**Piazza S. Onofrio, 4;**
**Roma 00165 (IT)**
• **Cappa, Paolo**
**P. le Aldo Moro;**
**Roma 00185 (IT)**
• **Patane', Fabrizio**
**P. le Aldo Moro;**
**Roma 00185 (IT)**

(74) Representative: **Papa, Elisabetta et al**
**Società Italiana Brevetti S.p.A**
**Piazza di Pietra, 39**
**00186 Roma (IT)**

(54) **System for asessing a law of motion and related method**

(57) A system for assessing a law of motion using, on a support (1), a number of linear-type monoaxial or biaxial accelerometers (2) with a number of sensitive axes greater than or equal to twelve, it being provided that the axes (3, 4) of each accelerometer (2) do not match, nor are they parallel to the axes (3, 4) of the other accelerometers (2), said accelerometers (2) being connected to data processing means (6).

EP 1 837 626 A2

**Description**

The present invention relates to a system and a method for assessing a law of motion, which are susceptible of being applied on a plurality of supports for different uses, employing linear-type monoaxial or biaxial accelerometers.

One of the most promising uses for this type of system concerns the assessing of the motion of articular segments of the human body, and in particular the head.

E.g., this type of system may be fitted on a helmet to assess the law of motion given to the head of a sportsperson engaged in a sports activity entailing high-value accelerations (football, boxing and the like), a pilot of land or aerospace vehicles, a crash test dummy, a patient engaged in rehabilitation activities or stabilometric tests, following pathologies affecting the sense of balance, etc.

In the state of the art, the measuring systems provide the use of accelerometers according to schemes requiring an accurate positioning and orienting of each individual sensor in space, in order to simplify the equations solving the law of motion.

Some of the schemes advanced provide the use of one triaxial accelerometer and three biaxial accelerometers, or of three triaxial accelerometers.

To improve measuring capabilities, there has also been advanced the use of redundant triaxial accelerometer systems, with a number of accelerometers equal to or greater than four.

However, it has been found that the use of triaxial accelerometers, as well as the technology associated to the carrying out of an accurate and repeatable positioning, is particularly burdensome in terms of costs.

The technical problem underlying the present invention is to provide a system for assessing a law of motion allowing to overcome the drawbacks mentioned with reference to the known art.

Such a problem is solved by a system for assessing a law of motion using, on a support, linear-type monoaxial or biaxial accelerometers with a number of sensitive axes greater than or equal to twelve, it being provided that the axes of each accelerometer do not match, nor are they parallel to the axes of the other accelerometers, said accelerometers being connected to data processing means.

Typically, such a support could be apt to be worn on an articular segment of the human body, a dummy, or any one rigid body of which the acceleration is to be assessed. An exemplary embodiment provides for the support to be a helmet.

The main advantage of the system according to the present invention consists in allowing an effective assessing of a law of motion without being particularly burdensome in terms of weights and costs, and without requiring a specific positioning of the accelerometers.

According to the same inventive concept, said problem is solved by a method for assessing a law of motion, comprising the steps of:

   * providing, on a support, monoaxial, biaxial or triaxial accelerometers with a total number of sensitive axes greater than or equal to twelve, it being provided that the axes of each accelerometer do not match, nor are they parallel to the axes of the other accelerometers;
   * connecting said accelerometers to data processing means; and
   * calculating the angular acceleration ω' and the inertial component (a-g) according to the relations:

$$\omega' \;=\; M_{\omega'}\,(V-O)$$

$$a-g \;=\; M_{(a-g)}\,(V-O)$$

where $M_{\omega'}$ and $M_{(a-g)}$ are two matrices, set at calibration, of a dimension 3 x $N_a$, where $N_a$ is the number of accelerometer axes used; V and O are the $N_a$ x 1 vectors of the accelerometer axes of Output and Offset, respectively.

The present invention will hereinafter be described according to a preferred embodiment thereof given by way of example and without limitative purposes, with reference to the annexed drawings, wherein:

   * figure 1 shows a perspective view of a helmet incorporating an exemplary assessing system, based on the use of linear-type biaxial accelerometers, according to the present invention;
   * figure 2 schematically shows a system for assessing a law of motion, complete with processing means;
   * figure 3 illustrates an operation mode of the assessing system according to the invention; and
   * figure 4 illustrates a calibration mode of the assessing system according to the invention.

Referring to the figures, the helmet 1 is susceptible of being worn-on for assessing a law of motion concerning a subject's head.

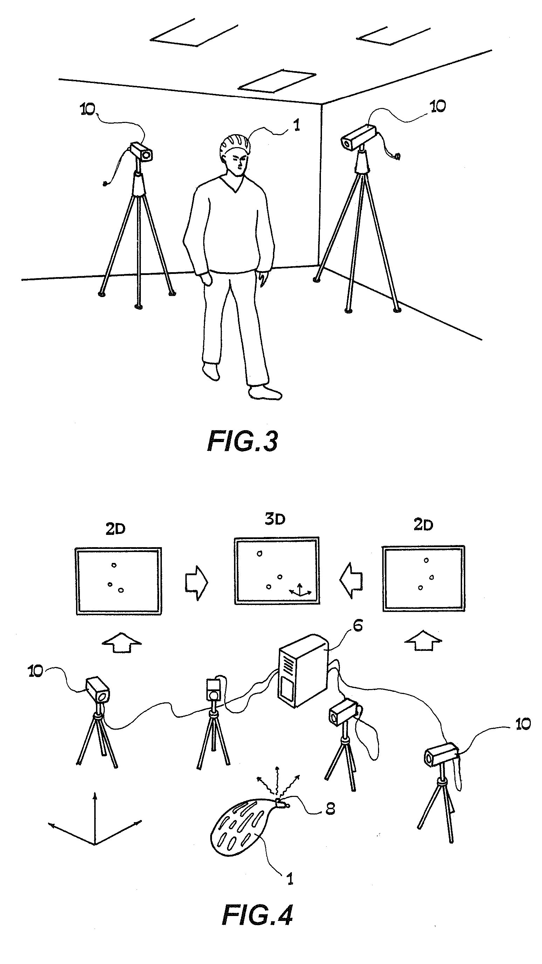

In the present embodiment, the subject is a patient engaged in motion analysis tests (figure 3).

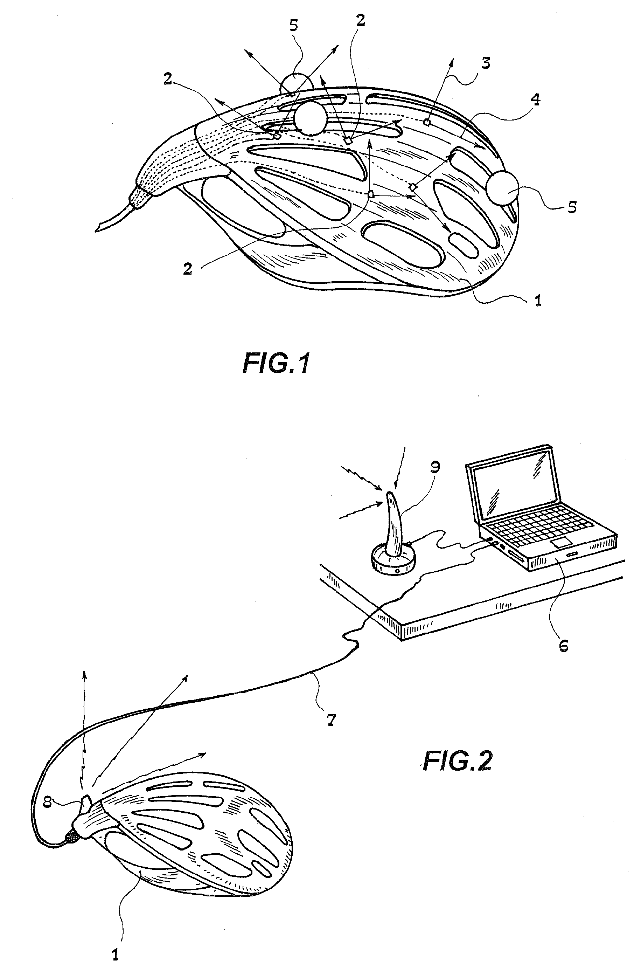

The helmet 1 has, onto its surface, a plurality of biaxial accelerometers 2, in a number greater than six. In the present embodiment the accelerometers are eight, six of which visible on a side of the helmet 1 depicted in figure 1.

However, the linear-type monoaxial, biaxial or triaxial accelerometers may be with a number of sensitive axes greater than or equal to twelve.

An example of linear-type biaxial accelerometer suitable for the present use is the ADXL311 model of ANALOG DEVICES Inc., already used in the automotive field for the activation of safety systems.

Each biaxial accelerometer 2 is characterised by a reference system with two axes, denoted by 3 and 4, respectively. The positioning of the accelerometers 2 onto the helmet 1 was selected so as to avoid singularity conditions and to decrease the effects due to errors associated to the accelerometer measurements, though taking into account the evident constraint conditions constituted by the shape of the helmet itself.

In particular, it is provided that the axes 3, 4 of each biaxial accelerometer 2 do not match, nor are they parallel to axes 3, 4 of the other accelerometers 2.

On the helmet 1, the assessing system further comprises a set of three markers 5, e.g. mere spheres with a reflecting surface, required only at the system calibration step.

Each biaxial accelerometer 2 is connected, to transmit continuously assessed data, to data processing means that, in the present embodiment, is constituted by a portable processor 6 provided with software required for data processing and a card for analog-digital conversion.

The connection may be carried out by cables 7, selected among the most light-weight ones in order not to affect the measuring, or a wireless data transmission system, operating according to any one protocol, e.g., *Bluetooth®* or the like, and provided with suitable transmitter 8 and receiver 9.

The software developed allows the on-line display of the calculated values of the linear component of acceleration (a-g), the angular acceleration ω' and the angular velocity, which together describe the law of motion concerning the helmet 1.

With regard to the procedure for calculating the angular acceleration and the inertial component (a-g), the redundancy in the number of transducers 2 allows to demonstrate that a linear relation exists between accelerometers output and accelerations, both angular and linear ones.

This relation is plainly represented by the following equations:

$$\omega' = M_{\omega'}(V-O) \quad \text{angular acceleration}$$

$$a-g = M_{(a-g)}(V-O) \quad \text{inertial component}$$

where $M_{\omega'}$ and $M_{(a-g)}$ are two 3 x $N_a$ matrices, where $N_a$ is the number of accelerometer axes used, in the present embodiment 2 x the number of biaxial accelerometers = 16.

V and O are the vectors of the accelerometer axes of Output and of Offset, respectively.

The assessing of angular velocity ensues from the integration of the patterns of the angular acceleration as a function of time.

The testing methodology is divided into the following steps:

Calibration of the instrument-fitted helmet

The calibration step is of a comparison type and in turn consists of two main steps: assessing the position and the orientation of the accelerometers positioned on the helmet and evaluating the sensitivity matrices of the device.

These steps are carried out by an external device, contactless and with known metrologic characteristics. Such a device, e.g., may work with an optoelectronic measuring methodology (figure 4) employing video cameras 10 that display said markers 5 (figure 1).

Acquisition of head kinematics

Upon having defined the sensitivity matrix of the instrument-fitted helmet, the system implemented can be used (figure 3). The acquisition test consists of the following steps:

(b1) defining and compensating the accelerometer offset at test start;

(b2) actual acquisition;

(b3) defining and compensating the accelerometer offset at test end.

Step (b1) consists in a test in which the helmet is kept still for a few seconds, while the acquisition system assesses sensor-generated signals; these values will be subtracted from the values measured at step (b2).

Downstream of step (b2), the patient is ordered to remain still, so as to set to the measuring chain an input with approximately zero velocity. It is assumed that during the entire test procedure - i.e., (b1), (b2) and (b3) - the system be affected by a linear trend of the drift generated by the data processing; therefore, in the event of the preceding assumption being admissible, said drift can be subtracted from the assessed velocity value.

The above-described system is used in the field of the method according to the present invention, applicable to any type of support and field, even in robotics.

To the above-described system and method for assessing a law of motion a person skilled in the art, in order to satisfy further and contingent needs, may effect several further modifications and variants, all however falling within the protective scope of the present invention, as defined by the appended claims.

**Claims**

1. A system for assessing a law of motion using, on a support (1), a number of monoaxial or biaxial accelerometers (2) with a total number of axes greater than or equal to twelve, it being provided that the axes (3, 4) of each accelerometer (2) do not match, nor are they parallel to the axes (3, 4) of the other accelerometers (2), said accelerometers (2) being connected to data processing means (6).

2. The system according to the preceding claim, wherein the data processing means comprises a processor with suitable software, with which there are calculated:

$$\omega' = M_{\omega'}(V-O) \quad \text{angular acceleration}$$

$$a-g = M_{(a-g)}(V-O) \quad \text{inertial component}$$

where $M_{\omega'}$ and $M_{(a-g)}$ are two $3 \times N_a$ matrices, where $N_a$ is the number of accelerometer axes used; V and O are the vectors of the accelerometer axes of Output and Offset, respectively.

3. The system according to the preceding claims, wherein the connection with the data processing means is carried out by a cable (7) or a wireless data transmission system (8, 9).

4. The system according to any one of the preceding claims, wherein said support is apt to be worn on an articular segment of the human body.

5. The system according to any one of the claims 1 to 3, which is applied to a movable element, acting as support, of which it is desirable to know the law of motion.

6. The system according to claim 4, wherein said support is a helmet.

7. The system according to claim 6, wherein the helmet is of the type for sports activities.

8. The system according to claim 6, wherein the helmet is of the type for pilots of land and/or aerospace vehicles.

9. The system according to claim 6, wherein the helmet is a helmet for military uses.

10. The system according to claim 6, wherein the helmet is a medical device for patient's stabilometric tests.

**11.** A method for assessing a law of motion, comprising the steps of:

* providing, on a support, a number of linear-type monoaxial or biaxial accelerometers with a number of sensitive axes greater than or equal to twelve, it being provided that the axes of each accelerometer do not match, nor are they parallel to the axes of the other accelerometers;
* connecting said accelerometers to data processing means; and
* calculating the angular acceleration ω' and the inertial component (a-g) according to the relationships:

$$\omega' = M_{\omega'} (V-O)$$

$$a-g = M_{(a-g)} (V-O)$$

where $M_{\omega'}$ and $M_{(a-g)}$ are two 3 x $N_a$ matrices, where $N_a$ is the number of accelerometer axes used; V and 0 are the vectors of the accelerometer axes of Output and Offset, respectively.

FIG.1

FIG.2

**FIG.3**

**FIG.4**